# EUROPEAN PATENT APPLICATION

(11) **EP 4 793 803 A1**
(43) Date of publication of application: **19.08.2026**
(21) Application number: 24890563.0
(22) Date of filing: 07.11.2024
(51) Int. Cl.: G06F 21/55, H04L 9/40, G06F 21/57, G06F 21/70

(54) **BMC INTRUSION PROTECTION METHOD AND APPARATUS, AND BMC AND COMPUTER DEVICE**

(30) Priority: 14.11.2023 CN 202311524436
(71) Applicant: Huawei Technologies Co., Ltd., Shenzhen, Guangdong 518129 (CN)
(72) Inventor: ZHANG, Chao, Shenzhen, Guangdong 518129 (CN); WU, Lingling, Shenzhen, Guangdong 518129 (CN); LI, Xiaochuan, Shenzhen, Guangdong 518129 (CN)
(74) Representative: Isarpatent
(86) International application number: PCT/CN2024/130578
(87) International publication number: WO 2025/103207

(57) **Abstract**

A BMC intrusion protection method, an apparatus, a BMC, and a computer device are disclosed, and the method is applied to a BMC in a computer device. The BMC includes a service module and a security detection module that are in communication isolation, and a storage medium accessible to the service module is isolated from a storage medium accessible to the security detection module. The service module is configured to provide a management function for a component in the computer device, and the security detection module is configured to perform security detection on the BMC. The method includes: The security detection module obtains data stored in a storage medium associated with the service module, analyzes the data to sense a security situation of the service module, and obtains a security detection result. If the security detection result indicates that the BMC is under an APT attack, the BMC is rebooted in a degraded boot mode. A defense-in-depth solution is used, namely, an intrusion detection capability is added to the BMC on the basis of defense, so that a dynamic defense chain of defense, detection, degradation, and recovery is formed, improving the capability of the BMC to defend against an APT attack, and ensuring security and trustworthiness of the BMC.

## Description

This application claims priority to Chinese Patent Application No. 202311524436.6, filed with the China National Intellectual Property Administration on November 14, 2023 and entitled "BMC INTRUSION PROTECTION METHOD, APPARATUS, BMC, AND COMPUTER DEVICE", which is incorporated herein by reference in its entirety.

### TECHNICAL FIELD

This application relates to the field of computers, and in particular, to a BMC intrusion protection method, an apparatus, a BMC, and a computer device.

### BACKGROUND

At present, attacks on computer devices are transiting from distributed attacks to organized and targeted advanced persistent threats (advanced persistent threats, APTs). The baseboard management controller (Baseboard Management Controller, BMC) in the computer device serves as a security center, and may perform trusted attestation on a component in the computer device, to prevent the component from being forged, tampered with, or replaced, ensuring security and reliability of the component. Therefore, how to improve the capability of the BMC to defend against an APT attack and ensure security and trustworthiness of the BMC is an urgent problem to be resolved.

### SUMMARY

This application provides a BMC intrusion protection method, an apparatus, a BMC, and a computer device, to effectively improve the capability of the BMC in defending against an APT attack, and ensure security and trustworthiness of the BMC.

According to a first aspect, a BMC intrusion protection method is provided, and the method is applied to a BMC in a computer device. The BMC includes a service module and a security detection module. The service module is configured to provide a management function for a component in the computer device, and the security detection module is configured to perform security detection on the BMC. The service module is in communication isolation from the security detection module, and a storage medium accessible to the service module is isolated from a storage medium accessible to the security detection module. The method includes: The security detection module obtains data stored in a storage medium associated with the service module, analyzes the data to sense a security situation of the service module, and obtains a security detection result. If the security detection result indicates that the BMC is under an APT attack, the BMC is rebooted in a degraded boot mode.

A BMC defense strategy that relies on perimeter defense alone results in breach of the perimeter defense by the APT attack and compromise of the BMC by the APT attack, reducing the value of the BMC as a trust center. This application provides a defense-in-depth solution, namely, an intrusion detection capability is added to the BMC on the basis of defense. The service module is isolated from the security detection module, to prevent the security detection module from being affected when the service module is under an APT attack. In addition, the security detection module analyzes the data of the service module of the BMC to sense the security situation of the service module. Upon a possible APT attack on the BMC, the BMC may be rebooted with basic services or BMC restorability guaranteed. In this way, a dynamic defense chain of defense, detection, degradation, and recovery is formed, effectively improving the capability of the BMC to defend against an APT attack, and ensuring security and trustworthiness of the BMC.

In a possible implementation, obtaining the security detection result based on the data stored in the storage medium associated with the service module includes: detecting operating security of the service module based on data stored in a first storage medium associated with the service module, to obtain the security detection result, where the first storage medium is configured to store data required for running of the service module.

Therefore, operating security of the service module is detected by analyzing data of the service module upon operating, that is, operating environment security is detected when the BMC performs a management operation on a component in the computer device. For example, data stored in a memory associated with the service module is analyzed, and a possible APT attack on the BMC is sensed by detecting memory security, improving the capability of the BMC to defend against an APT attack.

In another possible implementation, obtaining the security detection result based on the data stored in the storage medium associated with the service module includes: detecting data security of the service module based on data stored in a second storage medium associated with the service module, to obtain the security detection result, where the second storage medium is configured to store persistent data of the service module.

In this way, data security of the service module is detected by analyzing the persistent data of the service module. For example, data stored in a non-volatile memory associated with the service module is analyzed, and a possible APT attack on the BMC is sensed by detecting data security, improving the capability of the BMC to defend against an APT attack.

In another possible implementation, obtaining the security detection result based on the data stored in the storage medium associated with the service module includes: obtaining the security detection result by verifying the data based on a root of trust of the BMC.

In a trusted computer system, the root of trust serves as a base point of trust, and integrity verification is performed on the data of the service module by using the root of trust of the BMC, that is, whether a database is in a state of consistency and whether the data is modified are checked according to an integrity constraint, reducing a possibility that the root of trust is tampered with, improving the capability of the BMC to defend against an APT attack, and ensuring security and trustworthiness of the BMC.

In another possible implementation, obtaining the security detection result based on the data stored in the storage medium associated with the service module includes: analyzing the data based on an advanced threat analytics system to obtain the security detection result.

A remote system provides an intrusion detection capability that requires high computational power, to solve the problem of insufficient computational power of an embedded processor of the BMC. The BMC collaborates with the remote system to sense a possible APT attack on the BMC, improving the capability of the BMC to defend against an APT attack.

In another possible implementation, rebooting the BMC in the degraded boot mode includes: restarting the security detection module, and mounting a storage medium associated with the security detection module.

In another possible implementation, after restarting the security detection module, and mounting the storage medium associated with the security detection module, the method further includes: restarting the security detection module, mounting the storage medium associated with the security detection module, restarting the service module, and mounting the storage medium associated with the service module according to a reboot instruction.

In some embodiments, the storage medium associated with the security detection module stores initial data for restarting the service module, the security detection module configures the initial data for the storage medium associated with the security detection module, and the service module is restarted based on the initial data.

On the premise that secure boot protects firmware security of the BMC, memory security is ensured through resetting, and only the storage medium associated with the security detection module is mounted to ensure data security, so that data under an APT attack can be cleared, and the APT attack can be blocked. After the attack is blocked, the security detection module may operate, to maintain a capability of core service operating of an operating system and provide basic functions that are remotely manageable, without disconnection from management.

According to a second aspect, a security detection apparatus is provided, where the security detection apparatus includes modules configured to perform the BMC intrusion protection method according to the first aspect or any possible design of the first aspect. For example, the security detection apparatus includes a communication module, a detection module, and a control module.

The detection module is configured to obtain a security detection result based on data stored in a storage medium associated with a service module, where the data is used to sense a security situation of the service module, and the security detection result indicates a possibility of the BMC being under an advanced persistent threat APT attack.

The control module is configured to determine, based on the security detection result, that the BMC is under an APT attack, and reboot the BMC in a degraded boot mode.

In a possible implementation, when obtaining the security detection result based on the data stored in the storage medium associated with the service module, the detection module is specifically configured to: detect operating security of the service module based on data stored in a first storage medium associated with the service module, to obtain the security detection result, where the first storage medium is configured to store data required for running of the service module.

In another possible implementation, when obtaining the security detection result based on the data stored in the storage medium associated with the service module, the detection module is specifically configured to: detect data security of the service module based on data stored in a second storage medium associated with the service module, to obtain the security detection result, where the second storage medium is configured to store persistent data of the service module.

In another possible implementation, when obtaining the security detection result based on the data stored in the storage medium associated with the service module, the detection module is specifically configured to: obtain the security detection result by verifying the data based on a root of trust of the BMC.

In another possible implementation, when obtaining the security detection result based on the data stored in the storage medium associated with the service module, the detection module is specifically configured to: analyze the data based on an advanced threat analytics system to obtain the security detection result.

In another possible implementation, when rebooting the BMC in the degraded boot mode, the control module is specifically configured to: restart the security detection module, and mount a storage medium associated with the security detection module.

In another possible implementation, after restarting the security detection module, and mounting the storage medium associated with the security detection module, the control module is specifically configured to: restart the security detection module, mount the storage medium associated with the security detection module, restart the service module, and mount the storage medium associated with the service module according to a reboot instruction.

According to a third aspect, a BMC is provided, where the BMC includes a service module and a security detection module. The service module is configured to provide a management function for a component in a computer device, the security detection module is configured to perform security detection on the BMC, the service module is in communication isolation from the security detection module, a storage medium accessible to the service module is isolated from a storage medium accessible to the security detection module, and the security detection module is configured to perform the operation steps of the method according to the first aspect or any possible implementation of the first aspect.

According to a fourth aspect, a computer device is provided, where the computer device includes a processor, a storage, and the BMC according to the third aspect. The BMC is configured to perform the operation steps of the method according to the first aspect or any possible implementation of the first aspect.

According to a fifth aspect, a computer-readable storage medium is provided, including computer software instructions. When the computer software instructions are run in a processor, the processor is caused to perform the operation steps of the method according to the first aspect or any possible implementation of the first aspect.

According to a sixth aspect, a computer program product is provided. When the computer program product runs on a computer, the computer is caused to perform the operation steps of the method according to the first aspect or any possible implementation of the first aspect.

For technical effect brought by any design scheme in the second aspect to the sixth aspect, refer to technical effect brought by the first aspect or different design schemes in the first aspect. Details are not described herein again.

Based on the implementations provided in the foregoing aspects, this application may further combine technologies in this application to provide more implementations.

### BRIEF DESCRIPTION OF DRAWINGS

FIG. 1 is a diagram of a structure of a baseboard management controller according to this application;
FIG. 2 is a diagram of another structure of a baseboard management controller according to this application;
FIG. 3 is a schematic flowchart of a BMC intrusion protection method according to this application;
FIG. 4 is a diagram of a structure of a security detection apparatus according to this application; and
FIG. 5 is a diagram of a structure of a computer device according to this application.

### DESCRIPTION OF EMBODIMENTS

For ease of understanding, main terms in this application are first explained.

**Baseboard management controller (baseboard management controller, BMC):** a chip integrated on a mainboard or inserted to a mainboard in a form of peripheral component interconnect express (Peripheral Component Interconnect Express, PCIe), which is a dedicated controller for managing a server in terms of, for example, device information management, server status management, remote control management of the server, and maintenance management.

**Root of trust (Root of Trust, ROT):** also referred to as a trusted root and serves as a base point of trust in a trusted computer system. The root of trust includes a root of trust for measurement, a root of trust for storage, and a root of trust for reporting.

**Advanced persistent threat (Advanced Persistent Threat, APT):** also referred to as an advanced persistent threat and is a complex and persistent network attack. The advanced persistent threat includes three elements: advanced, persistent, and threat. Advanced means that an APT attack requires a higher degree of customization and complexity than a traditional attack, and consumes a large amount of time and resources to research and determine vulnerabilities of a target. Persistent means that the target needs to be continuously observed to achieve a specific objective and to maintain long-term right of access to the target. Threat emphasize that the target is a high-value organization. Once the attack succeeds, huge economic losses, even devastation, will be caused to the target in most cases.

The attack phase of the advanced persistent threat includes information collection, external penetration, command and control, lateral movement, and data exfiltration. The process from targeting to attack success goes through multiple phases. In the security field, this process can be called a kill chain.

An APT attacker is usually an organization. After selecting a target, the APT attacker collects all information related to the target. The information includes the organizational structure of the target, office addresses, products and services, contacts, email addresses, conference agendas, portal website directory structure, internal network architecture, deployed network security devices, open ports, office OS and email system used by enterprise employees, and system and version of the world wide web (World Wide Web, web) server of the company.

After the information is collected, malware is developed and deployed in the target. The malware is usually a small-sized remote control tool, which can be referred to as a remote administration tool (Remote Administration Tool or Remote Access Trojan, RAT), and is used to establish a command and control channel (Command and control channels, C&C) with a control server.

When a user uses a client program or browser having a vulnerability to open a file with malware, the malware will hit the vulnerability and download and install the malware, to facilitate a successful attack on the target. In many cases, the malware also elevates privileges or adds an administrator user. For example, the malware is started upon startup, or even silently disables or modifies host firewall settings in the background to prevent the malware from being detected.

Hosts in a same organization usually have a same system and similar application software environments. Therefore, the hosts have same vulnerabilities to a large extent. After an intranet host is compromised, the malware spreads laterally to other hosts in the subnet or spreads vertically to the intranet server of the company. A remote management tool has functions of keyboard recording and screen recording. Therefore, it is easy to obtain a domain password of a user, a mailbox password, and server passwords.

The attack process also implements self-protection through anonymous networks, encrypted communication, and covering tracks. When confidential information is exfiltrated, various technical means are used to prevent the information from being detected by network security devices. On one hand, the whole is broken up into parts. The confidential information is scattered, encrypted, or obfuscated to prevent data leakage through keyword scanning by a data leakage prevention (Data leakage prevention, DLP) device. Additionally, the sending rate is limited to ensure that the sending rate does not exceed detection thresholds of various security devices.

To resolve the problem that a BMC is unable to defend against an APT attack, this application provides a BMC intrusion protection method. To be specific, a service module and a security detection module that are in communication isolation are disposed in the BMC, a storage medium accessible to the service module is isolated from a storage medium accessible to the security detection module, the service module is configured to provide a management function for a component in a computer device, and the security detection module is configured to perform security detection on the BMC. The security detection module obtains data stored in a storage medium associated with the service module, analyzes the data to sense a security situation of the service module, and obtains a security detection result. If the security detection result indicates that the BMC is under an APT attack, the BMC is rebooted in a degraded boot mode.

In a BMC defense strategy that relies on perimeter defense alone, that is, login to the operating system is restricted through a firewall and interface encapsulation, attacker behaviors are restricted by using the identity and access management (Identity and Access Management, IAM) technology, but awareness of behaviors in the attack process is absent. As the BMC exposes more interfaces, it is likely to have vulnerabilities like command injection, database injection, and buffer overflow, resulting in breach of the perimeter defense by the APT attack and compromise of the BMC by the APT attack, and reducing the value of the BMC as a trust center. This application provides a defense-in-depth solution, namely, an intrusion detection capability is added to the BMC on the basis of defense. The service module is isolated from the security detection module, to prevent the security detection module from being affected when the service module is under an APT attack. In addition, the security detection module analyzes the data of the service module of the BMC to sense the security situation of the service module. Upon prediction of a possible APT attack on the BMC, the BMC may be rebooted with basic services or BMC restorability guaranteed. In this way, a dynamic defense chain of defense, detection, degradation, and recovery is formed, effectively improving the capability of the BMC to defend against an APT attack, and ensuring security and trustworthiness of the BMC.

The method provided in this application may be applied to a computer device including a BMC, for example, an inference server, a training server, an inference card, a training card, a cabinet server, a blade server, or a rack server.

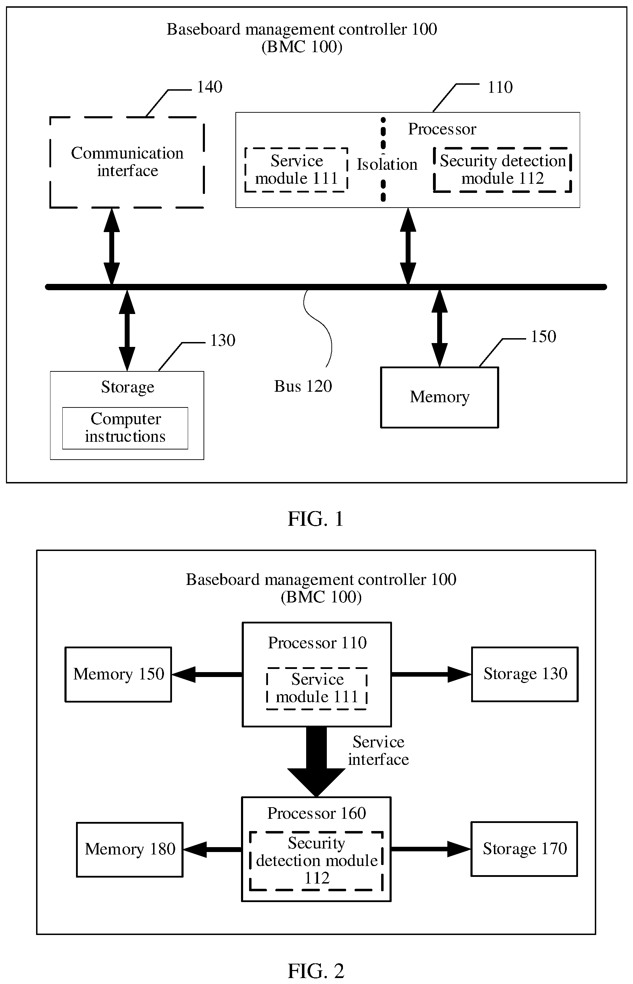

The following describes in detail a BMC intrusion protection method provided in this application with reference to the accompanying drawings. FIG. 1 is a diagram of a structure of a baseboard management controller according to this application. As shown in FIG. 1, the baseboard management controller 100 includes a processor 110, a bus 120, a storage 130, a communication interface 140, and a memory 150 (which may also be referred to as a main memory (main memory) unit). The processor 110, the storage 130, the memory 150, and the communication interface 140 are connected through the bus 120.

The processor 110 is a control center of the baseboard management controller 100. The processor 110 may be a central processing unit (Central Processing Unit, CPU). The processor 110 may alternatively be another general-purpose processor, a digital signal processor (digital signal processor, DSP), an application-specific integrated circuit (application-specific integrated circuit, ASIC), a field-programmable gate array (field-programmable gate array, FPGA), a system on chip (system on chip, SoC) or another programmable logic device, a discrete gate or transistor logic device, a discrete hardware component, or the like. The general-purpose processor may be a microprocessor, any conventional processor, or the like. For ease of description, in the following embodiments, an example in which the processor 110 is a CPU is used for description.

The baseboard management controller 100 in FIG. 1 may include one or more processors. The processor may be a multi-core (multi-core) processor, that is, the processor includes one processor core (core) or multiple processor cores. For example, the processor 110 shown in FIG. 1 includes N processor cores. The processor herein may be one or more devices, circuits, and/or compute units configured to process data (for example, computer program instructions).

In some embodiments, the processor 110 runs a service module 111 and a security detection module 112. The service module 111 is configured to provide a management function for a component in a computer device that includes the baseboard management controller 100. The security detection module 112 is configured to perform security detection on the baseboard management controller 100, that is, detect operating environment security and data integrity security of the service module 111. For example, the security detection module 112 obtains data stored in a storage medium associated with the service module 111, analyzes the data to sense a security situation of the service module 111, and obtains a security detection result. When the security detection result indicates that the baseboard management controller 100 is under an APT attack, the baseboard management controller 100 is rebooted in a degraded boot mode, to improve the capability of the BMC to defend against an APT attack and ensure security and trustworthiness of the BMC.

The service module 111 and the security detection module 112 may be processes or threads running on a same processor 110. The service module 111 is in communication isolation from the security detection module 112. Optionally, the service module 111 and the security module 112 may also be processes or threads running on different processors.

For example, the service module 111 is prohibited from obtaining user information and user group information of the security detection module 112. For another example, the service module 111 is prohibited from obtaining process information in the security detection module 112. For another example, the service module 111 is prohibited from sharing a bus with the security detection module 112, with a service whitelist message bus being an exception. For another example, the service module 111 is prohibited from system calls other than those in a whitelist. The whitelist may contain a security detection interface, an upgrade function interface, a configuration function interface, and a security management interface. The security detection interface is configured to allow the security detection module 112 to detect data of the service module 111 needed for an APT attack. The upgrade function interface is configured to allow the security detection module 112 to upgrade data of the service module 111. The configuration function interface is configured to allow the security detection module 112 to configure data of the service module 111. The security management interface is configured to allow the security detection module 112 to manage data of the service module 111. A storage medium accessible to the service module 111 is isolated from a storage medium accessible to the security detection module 112. For example, a memory accessible to the service module 111 is isolated from a memory accessible to the security detection module 112. For another example, a flash memory accessible to the service module 111 is isolated from a flash memory accessible to the security detection module 112. For another example, the service module 111 is prohibited from rewriting file information in a storage medium accessible to the security detection module 112. For another example, the security detection module 112 is prohibited from reading file information in a storage medium accessible to the service module 111, and the security detection module 112 may read data that is in a storage medium accessible to the service module 111 and that is needed for intrusion detection.

It should be noted that, if the service module 111 and the security detection module 112 access different regions in a same storage medium, the different regions in the same storage medium are isolated. For example, different regions in a same storage medium are isolated by controlling permissions to different regions in the same storage medium, to restrict access. Authorizing a user or a role to access a specific region is granted through an access control list and a role permission, preventing an unauthorized user from obtaining sensitive information.

For example, the service module 111 may access a first region in the storage 130, and the first region in the storage 130 is used to store persistent data of the service module 111. The security detection module 112 may access a second region in the storage 130, and the second region in the storage 130 is used to store persistent data of the security detection module 112. The first region and the second region in the storage 130 are isolated from each other.

The service module 111 may access a first region in a memory 150, and the first region in the memory 150 is used to store data of the service module 111 upon operating. The security detection module 112 may access a second region in the memory 150, and the second region in the memory 150 is used to store data of the security detection module 112 upon operating. The first region and the second region in the memory 150 are isolated from each other.

Optionally, inter-process isolation is used to implement communication isolation between the service module 111 and the security detection module 112 and isolation between the storage media accessed. For example, a linux namespace (namespace) technology is used to implement communication isolation between the service module 111 and the security detection module 112 and isolation between the storage media accessed.

In this way, in a same operating system of the BMC, user isolation (for example, isolation between user names, and isolation between a privileged user and a common user), file isolation (for example, storage isolation), inter-process communication isolation, and inter-component communication isolation are used to form system security isolation, to isolate the service module of the BMC from the security detection module of the BMC. Storage media used by the two modules are isolated, and the service module is only allowed to access the security detection module through a service interface/system managed by a whitelist, minimizing an exposed surface and preventing the security detection module from being affected when the service module is under an APT attack. Security of the security detection module is improved. Then, the security detection module analyzes the data of the service module of the BMC to sense the security situation of the service module, improving the capability of the BMC to defend against an APT attack and ensuring security and trustworthiness of the BMC.

The memory 150 may be a volatile memory pool. The volatile memory may be a random access memory (random access memory, RAM), used as an external cache. By way of example rather than limitation, RAMs in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory 150 is configured to store data needed when the service module 111 operates, for example, BMC firmware, service data, and network configuration data.

The storage 130 may be a non-volatile memory pool. The non-volatile memory may be a read-only memory (read-only memory, ROM), a magnetic disk, or a flash memory. The storage 130 is configured to store persistent data of the service module 111, for example, user information, alarm data, fault diagnosis data, a BMC event subscription scope, and an alarm reporting level.

The communication interface 140 is configured to implement communication between the baseboard management controller 100 and an external device or component. For example, the baseboard management controller 100 communicates with a processor, a memory, a storage, a peripheral, and the like in the computer device. In this application, the communication interface 140 may transmit data of the service module 111 to an advanced threat analytics system, and the advanced threat analytics system analyzes the data to obtain a security detection result.

The bus 120 may include a path, configured to transfer information between the foregoing components (such as the processor 110, the memory 150, and the storage 130). In addition to a data bus, the bus 120 may further include a power bus, a control bus, a status signal bus, and the like. However, for clarity of description, various buses are marked as the bus 120 in the figure. The bus 120 may be a peripheral component interconnect express (Peripheral Component Interconnect Express, PCIe) bus, an extended industry standard architecture (extended industry standard architecture, EISA) bus, a unified bus (unified bus, Ubus, or UB), a compute express link (compute express link, CXL), cache coherent interconnect for accelerators (cache coherent interconnect for accelerators, CCIX), a DDR, an embedded multimedia card (Embedded Multi Media Card, EMMC) control protocol, or the like. The bus 120 may be classified into an address bus, a data bus, a control bus, and the like.

It should be noted that in FIG. 1, that the baseboard management controller 100 includes only one processor 110 and one storage 130 is used as an example. Herein, the processor 110 and the storage 130 each indicate a type of components or devices. In a specific embodiment, a quantity of components or devices of each type may be determined based on service requirements.

In some embodiments, the baseboard management controller 100 may include multiple processors, and the service module 111 and the security detection module 112 may run on different processors. The baseboard management controller 100 may include multiple storages and multiple memories, so that the service module 111 and the security detection module 112 access different storages and memories, implementing communication isolation between the service module 111 and the security detection module 112, and isolation between the storage medium accessible to the service module 111 and the storage medium accessible to the security detection module 112.

For example, as shown in FIG. 2, a baseboard management controller 100 may include a processor 110 and a processor 160. The processor 110 runs a service module 111. The processor 160 runs a security detection module 112. The baseboard management controller 100 includes a storage 130 and a storage 170. The service module 111 may access the storage 130, and the storage 130 is configured to store persistent data of the service module 111. The security detection module 112 may access the storage 170, and the storage 170 is configured to store persistent data of the security detection module 112. The storage 130 and the storage 170 are isolated from each other.

The baseboard management controller 100 includes a memory 150 and a memory 180. The service module 111 may access the memory 150. The memory 150 is configured to store data of the service module 111 upon operating. The security detection module 112 may access the memory 180, and the memory 180 is configured to store data of the security detection module 112 upon operating. The memory 150 and the memory 180 are isolated from each other.

In some other embodiments, a storage medium associated with the security detection module 112 may further store a root of trust of the baseboard management controller 100. For example, the root of trust of the baseboard management controller 100 and the persistent data of the security detection module 112 are stored in a same storage medium, and the storage 130 or the storage 170 in the baseboard management controller 100 stores the root of trust of the baseboard management controller 100 and the persistent data of the security detection module 112. For another example, the root of trust of the baseboard management controller 100 and the persistent data of the security detection module 112 are stored in different storage media. Integrity verification is performed on the data of the service module 111 by using the root of trust of the BMC.

In a possible implementation, the service module 111 and the security module 112 may alternatively be implemented as hardware. Correspondingly, the service module 111 and the security module 112 are implemented as one logic circuit, or may be implemented as two logic circuits, to implement functions of the service module 111 and the security module 112 respectively.

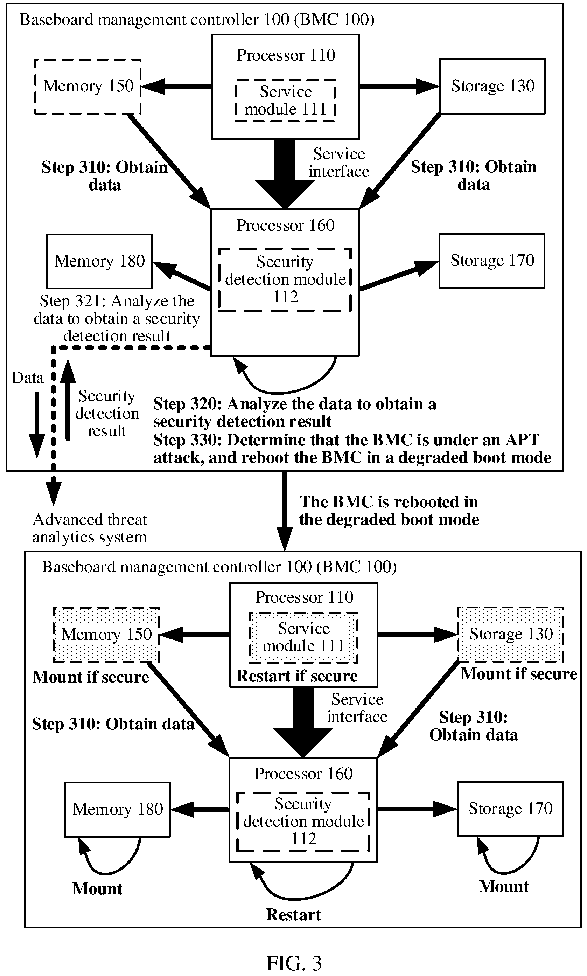

The following describes, with reference to the accompanying drawings, a procedure of a BMC intrusion protection method provided in this application, as shown in FIG. 3. Herein, an example in which the service module 111 and the security detection module 112 of the baseboard management controller 100 shown in FIG. 1 detect an APT attack on the baseboard management controller 100 is used for description.

**Step 310: A security detection module obtains data stored in a storage medium associated with a service module.**

Data stored in a memory accessible to the service module is obtained, where the data stored in the memory includes data needed by a BMC to perform a management operation on a component. For example, the security detection module obtains, from the memory accessible to the service module, data such as a software program run by the BMC, service data, and a network configuration.

Data stored in a flash memory accessible to the service module is obtained, where the data stored in the flash memory includes persistent data of the BMC. For example, the persistent data includes persistent data needed in a running process of the software program of the BMC, for example, alarm data and fault diagnosis data. The persistent data may further include data of configuration and management on the service module of the BMC by a user, for example, a BMC event subscription scope and an alarm reporting level.

In some embodiments, the security detection module may periodically obtain the data stored in the storage medium associated with the service module, analyze the data, and determine whether the BMC is under an APT attack, to block the APT attack on the BMC in time.

**Step 320: The security detection module obtains a security detection result based on the data stored in the storage medium associated with the service module.**

The security detection module analyzes the data to sense a security situation of the service module, and obtains the security detection result. The security detection result indicates a possibility that the BMC is under an APT attack. For example, the security detection result may indicate that the BMC is under an APT attack. The security detection result may further indicate that the BMC may be under an APT attack. The security detection result may further indicate that the BMC is not under an APT attack.

In some embodiments, the security detection module detects operating security of the service module based on the data stored in the memory accessible to the service module, to obtain the security detection result. The operating security may also be referred to as memory security.

For example, the security detection module analyzes a program running on the BMC, and determines whether the program running on the BMC contains malware. If malware is injected into the program running on the BMC, and program jump is controlled, a pointer jumps to an attack program when the BMC program is running, causing an attack on the BMC. If the program running on the BMC contains malware, it is determined that the BMC is under an APT attack.

For another example, the security detection module analyzes BMC basic data, and determines whether the BMC basic data is tampered with. An APT attacker tampers with the BMC basic data, such as user information and configuration items, so that the APT attacker can arbitrarily create a user and control the BMC as an authorized user, causing an attack on the BMC. If the BMC basic data is tampered with, whether the BMC is under an APT attack is determined.

For another example, the security detection module analyzes a network status, and determines whether abnormal traffic accessing the BMC exists. Abnormal traffic may be generated when the BMC is attacked. If the abnormal traffic accessing the BMC exists, whether the BMC is under an APT attack is determined.

In some other embodiments, the security detection module detects data security of the service module based on data stored in a flash memory associated with the service module, to obtain the security detection result.

For example, the security detection module analyzes BMC basic data, and determines whether the BMC basic data is tampered with. An APT attacker tampers with the BMC basic data in the flash memory, so that the APT attacker can arbitrarily create a user and control the BMC as an authorized user, causing an attack on the BMC. If the BMC basic data is tampered with, it is determined that the BMC is under an APT attack.

For another example, the security detection module may also determine whether abnormal data exists in a security log by analyzing the security log. When the BMC is attacked, the security log may contain abnormal data. If the abnormal data exists in the security log, it is determined that the BMC is under an APT attack.

The foregoing descriptions are examples of security detection performed by the security detection module on the BMC. Content of detection performed by the security detection module in this application includes but is not limited to data related to a process of management operations performed by the BMC, for example, a program, basic data, and a network status, and may further include integrity check.

For example, the security detection module may perform integrity check on the data stored in the memory associated with the service module.

For example, integrity check is performed on a code segment in the memory, hash calculation is performed on the code segment upon initial loading to obtain a root of trust, and the root of trust is stored in a storage medium associated with the security detection module. In a process of running the code segment, the BMC obtains a hash value of the code segment, and compares the hash value with the root of trust to perform integrity check. If the hash value is the same as the root of trust, it indicates that the program running on the BMC does not contain malware, and it is determined that the BMC is not under an APT attack. If the hash value is different from the root of trust, it indicates that the program running on the BMC contains malware, and it is determined that the BMC is under an APT attack.

For another example, the security detection module may perform integrity check on the data stored in the flash memory associated with the service module. The security detection module may perform integrity check on initial data of the BMC. The initial data includes a program file, a configuration file, and a data file that are stored in the flash memory associated with the service module.

The security detection module may perform hash calculation on the data in the flash memory to obtain a hash value, and compare the hash value with the root of trust of the BMC. If the hash value is the same as the root of trust of the BMC, it indicates that the data in the flash memory is not tampered with, and the BMC is not under an APT attack. If the hash value is different from the root of trust of the BMC, it indicates that the data in the flash memory may be tampered with, and the BMC is under an APT attack.

For example, integrity check is performed on a configuration file, hash calculation is performed on the configuration file to obtain a root of trust, and the root of trust is stored in a storage medium associated with the security detection module. After the configuration file is modified, a new root of trust is immediately generated, and the root of trust stored in the storage medium associated with the security detection module is updated. In the process of running the code segment, the BMC may detect the configuration file, for example, compare whether the hash value of the configuration file is the same as the root of trust, to determine whether the BMC is under an APT attack.

In addition, the BMC program may have a vulnerability. The APT attacker have long studied the vulnerability in the BMC program and gradually penetrates the BMC through the vulnerability to attack the BMC. In the degraded boot mode, the BMC may be restored. Program security can be ensured by upgrading the BMC program (for example, upgrading BMC firmware). For example, a BMC program upgrade is downloaded from the official website, to provide a patch program. Traditional secure boot ensures program integrity.

Optionally, if computational power of a processor in the BMC is insufficient and is unable to support analysis of the data obtained from the storage medium associated with the service module, the obtained data may be analyzed by using a remote system, to sense that the BMC may be under an APT attack, improving the capability of the BMC to defend against an APT attack.

For example, this embodiment may further include step 321: Analyze the data based on an advanced threat analytics system to obtain a security detection result. The BMC may send the data to the advanced threat analytics system, a security detection result is obtained based on data of the advanced threat analytics system, and the BMC receives the security detection result fed back by the advanced threat analytics system.

**Step 330: The security detection module determines, based on the security detection result, that the BMC is under an APT attack, and reboots the BMC in the degraded boot mode.**

When sensing that the BMC is under an APT attack, the security detection module controls to reboot the BMC in the degraded boot mode, or the BMC receives a reboot instruction to reboot the BMC in the degraded boot mode.

The degraded boot mode may be: resetting the memory associated with the service module, restarting the security detection module, mounting the storage medium associated with the security detection module, not starting the service module, and not mounting the storage medium associated with the service module, to ensure a highly secure operating environment of the BMC, block an APT attack path, ensure a core service of the BMC, and provide remote recovery and configuration capabilities.

After the operating environment of the BMC is secure, the BMC receives the reboot instruction to reboot the BMC, that is, restart the security detection module, mount the storage medium associated with the security detection module, restart the service module, and mount the storage medium associated with the service module.

In some embodiments, the security detection result indicates that the data security of the service module is under an APT attack, that is, the data stored in the flash memory associated with the service module is under an APT attack. The security detection module configures backup initial data for the flash memory associated with the service module. The service module restarts, based on the initial data of the service module, the service module and the storage medium associated with the service module. The initial data may be stored in a flash memory associated with the security detection module.

According to the BMC intrusion protection method provided in this application, an intrusion detection capability is added to the BMC on the basis of perimeter defense. On the premise that secure boot protects firmware security, memory security and data security are comprehensively analyzed, memory security is ensured through resetting, and only the storage medium associated with the security detection module is mounted to ensure data security, so that all existing APT attacks can be blocked. After the APT attack is blocked, as the security detection module operates normally, a capability of core service operating of an operating system can be maintained and basic functions like upgrade and configuration management that are remotely manageable can be provided. After the memory security and data security of the BMC are ensured, the BMC is rebooted, that is, the service module and security detection module are restarted. In this way, a dynamic defense chain of defense, detection, degradation, and recovery is formed, forming a defense-in-depth solution for the BMC, effectively improving the capability of the BMC to defend against an APT attack, and ensuring security and trustworthiness of the BMC.

Optionally, the BMC may further feed back the security detection result to a display end, to display the security detection result, so that a system administrator may learn a security status of the BMC in time, and reboot the BMC in the degraded boot mode, to block an APT attack.

It may be understood that, to implement functions in the foregoing embodiment, the BMC includes a corresponding hardware structure and/or software module for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

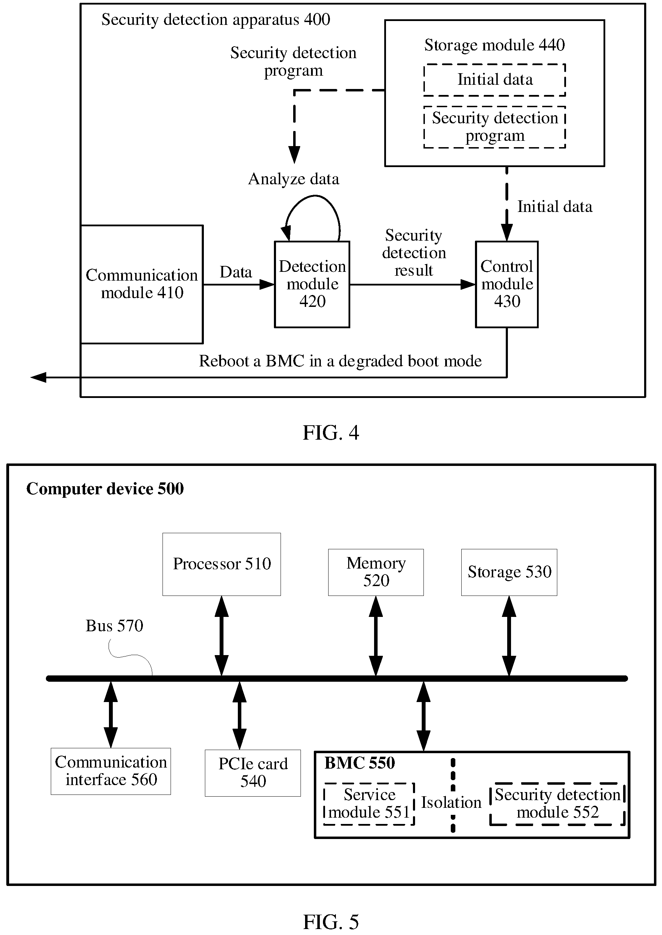

The foregoing describes in detail the BMC intrusion protection method provided in this application with reference to FIG. 1 to FIG. 3. The following describes a security detection apparatus provided in this application with reference to FIG. 4.

FIG. 4 is a diagram of a structure of a possible attestation apparatus according to this application. The attestation apparatuses may implement functions of the remote device or the computer device in the foregoing method embodiments. Therefore, beneficial effects of the foregoing method embodiments can also be implemented. In this embodiment, the attestation apparatus may be the device shown in FIG. 1, or may be a module (for example, a chip) used in a server.

As shown in FIG. 4, the security detection apparatus 400 includes a communication module 410, a detection module 420, a control module 430, and a storage module 440. The security detection apparatus 400 is configured to implement functions of the security detection module in the method embodiment shown in FIG. 3.

The communication module 410 is configured to obtain data stored in a storage medium associated with a service module. For example, the communication module 410 is configured to perform step 310 in FIG. 3.

The detection module 420 is configured to analyze the data stored in the storage medium associated with the service module, to obtain a security detection result. For example, the detection module 420 is configured to perform step 320 in FIG. 3.

The control module 430 is configured to determine, based on the security detection result, that a BMC is under an APT attack, and reboot the BMC in a degraded boot mode. For example, the control module 430 is configured to perform step 330 in FIG. 3.

Optionally, the detection module 420 is configured to detect operating security of the service module based on data stored in a first storage medium associated with the service module, to obtain the security detection result, where the first storage medium is configured to store data required for running of the service module.

Optionally, the detection module 420 is configured to detect data security of the service module based on data stored in a second storage medium associated with the service module, to obtain the security detection result, where the second storage medium is configured to store persistent data of the service module.

The storage module 440 is configured to store data needed for security detection and a security detection program, and to back up initial data of the service module.

It should be understood that the security detection apparatus 400 in this embodiment of this application may be implemented using an application-specific integrated circuit (application-specific integrated circuit, ASIC) or a programmable logic device (programmable logic device, PLD). The PLD may be a complex programmable logic device (complex programmable logical device, CPLD), a field-programmable gate array (field-programmable gate array, FPGA), a generic array logic (generic array logic, GAL), a data processing method (data processing unit, DPU), an accelerator card, an offload card, or any combination thereof. When the BMC intrusion protection method shown in FIG. 3 is alternatively implemented using software, and the modules may alternatively be software modules, the security detection apparatus 400 and the modules thereof may alternatively be software modules.

The security detection apparatus 400 according to this embodiment of this application may correspondingly perform the method described in embodiments of this application. In addition, the foregoing and other operations and/or functions of the units in the security detection apparatus 400 are separately used to implement corresponding procedures of the method in FIG. 3. For brevity, details are not described herein again.

FIG. 5 is a diagram of a structure of a computer device according to this application. As shown in FIG. 5, the computer device 500 includes a processor 510, a memory 520, a storage 530, a PCIe card 540, a BMC 550, and a communication interface 560. The processor 510, the memory 520, the storage 530, the PCIe card 540, the BMC 550, and the communication interface 560 are connected through a bus 570.

The processor 510 is a control center of the computer device 500. The processor 510 may be a high-power compute unit with a computational capability, such as a central processing unit (central processing unit, CPU), a graphics processing unit (graphics processing unit, GPU), a data processing unit (data processing unit, DPU), a neural processing unit (neural processing unit, NPU), and an embedded neural network processing unit (neural-network processing unit, NPU). The processor 510 includes one processor core (core) or multiple processor cores.

In some embodiments, the processor 510 includes a register and a cache.

The cache is configured to store instructions or data that may be accessed multiple times by the processor core in the processor 510. This improves a data processing speed of the processor, and prevents the processor from frequently accessing the memory 520.

The register is configured to store instructions or data that may be accessed multiple times by the processor core in the processor 510. Because an access speed of the register is higher than that of the cache, the instructions or data that may be accessed multiple times by the processor core may be first stored in the register, so that the data processing speed of the processor can be further improved.

Optionally, the processor 510 may alternatively be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor, any conventional processor, or the like.

The memory 520 (also referred to as a main memory (main memory) unit) may be a volatile memory pool or a non-volatile memory pool, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitation, RAMs in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The storage 530 may be a persistent storage medium, for example, a magnetic disk, a hard disk drive or a solid-state drive. The PCIe card 540 may be a peripheral. For example, the PCIe card 540 includes a network interface card and the like. The communication interface 560 is configured to implement communication between the computer device 500 and an external device or a component.

The BMC 550 is configured to manage another component in the computer device 500, such as the processor 510, the memory 520, the storage 530, the PCIe card 540, and the communication interface 560.

In this application, the BMC 550 includes a service module 551 and a security detection module 552. For functions of the service module 551 and the security detection module 552, refer to descriptions of the service module and the security detection module in the foregoing embodiments.

The bus 570 may include a path, configured to transfer information between the foregoing components (such as the processor 510, the memory 520, the storage 530, the PCIe card 540, and the communication interface 560). In addition to a data bus, the bus 570 may further include a power bus, a control bus, a status signal bus, and the like. However, for clarity of description, various buses are marked as the bus 570 in the figure. The bus 570 may be a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL), cache coherent interconnect for accelerators (cache coherent interconnect for accelerators, CCIX), or the like. The bus 570 may be classified into an address bus, a data bus, a control bus, and the like.

The device structure shown in FIG. 5 does not constitute a limitation on the computer device. The computer device may include more or fewer components than those shown in the figure, a combination of some components, or a different component layout. For example, the computer device may further include an artificial intelligence card, a read card, a GPU, a DPU, an NPU, and the like.

The components described in this application may be a processor, a storage, a memory, a register, a cache, a network interface card, a circuit board, and the like that are included in the computer device. The BMC included in the computer device may perform APT attack detection on the BMC according to the BMC intrusion protection method provided in this application, to defend against an APT attack, ensuring security and trustworthiness of the BMC.

It should be understood that the BMC 550 in the computer device 500 according to this embodiment may correspond to the security detection apparatus 400 in embodiments, and may correspond to a corresponding body that performs any method in FIG. 3. In addition, the foregoing and other operations and/or functions of the modules in the security detection apparatus 400 are separately used to implement corresponding procedures of the method in FIG. 3. For brevity, details are not described herein again.

This application provides a cluster. The cluster may include multiple computer devices, the computer device includes multiple components and a BMC, and the BMC may perform APT attack detection on the BMC according to the BMC intrusion protection method provided in this application, to defend against an APT attack, ensuring security and trustworthiness of the BMC. In this way, the BMC in the computer device performs trusted attestation on a component in the computer device, to prevent the component from being forged, tampered with, or replaced, ensuring security and reliability of the component.

This application further provides a chip. The chip can implement functions of the service module and the security detection module in FIG. 1 to FIG. 5. The chip may be an independent chip, or may be a chip integrated in a BMC.

The method steps in embodiments may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a compute device. Certainly, the processor and the storage medium may alternatively exist in a compute device as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer program or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD). The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A baseboard management controller BMC intrusion protection method, wherein the method is applied to a BMC in a computer device, the BMC comprises a service module and a security detection module, the service module is configured to provide a management function for a component in the computer device, the security detection module is configured to perform security detection on the BMC, the service module is in communication isolation from the security detection module, a storage medium accessible to the service module is isolated from a storage medium accessible to the security detection module, and the method is performed by the security detection module, wherein the method comprises:
obtaining a security detection result based on data stored in a storage medium associated with the service module, wherein the data is used to sense a security situation of the service module, and the security detection result indicates a possibility of the BMC being under an advanced persistent threat APT attack; and
determining, based on the security detection result, that the BMC is under the APT attack, and rebooting the BMC in a degraded boot mode.

2. The method according to claim 1, wherein obtaining the security detection result based on the data stored in the storage medium associated with the service module comprises:
detecting operating security of the service module based on data stored in a first storage medium associated with the service module, to obtain the security detection result, wherein the first storage medium is configured to store data required for running of the service module.

3. The method according to claim 1, wherein obtaining the security detection result based on the data stored in the storage medium associated with the service module comprises:
detecting data security of the service module based on data stored in a second storage medium associated with the service module, to obtain the security detection result, wherein the second storage medium is configured to store persistent data of the service module.

4. The method according to claim 2 or 3, wherein obtaining the security detection result comprises:
verifying the data based on a root of trust of the BMC to obtain the security detection result.

5. The method according to claim 2 or 3, wherein obtaining the security detection result comprises:
analyzing the data based on an advanced threat analytics system to obtain the security detection result.

6. The method according to claim 1, wherein rebooting the BMC in the degraded boot mode comprises:
restarting the security detection module, and mounting a storage medium associated with the security detection module.

7. The method according to claim 6, wherein after restarting the security detection module and mounting the storage medium associated with the security detection module, the method further comprises:
restarting the security detection module, mounting the storage medium associated with the security detection module, restarting the service module, and mounting the storage medium associated with the service module according to a reboot instruction.

8. A security detection apparatus, comprising:
a detection module, configured to obtain a security detection result based on data stored in a storage medium associated with the service module, wherein the data is used to sense a security situation of the service module, and the security detection result indicates a possibility of the BMC being under an advanced persistent threat APT attack; and
a control module, configured to determine, based on the security detection result, that the BMC is under the APT attack, and reboot the BMC in a degraded boot mode.

9. A baseboard management controller BMC, wherein the BMC comprises a service module and a security detection module, the service module is configured to provide a management function for a component in the computer device, the security detection module is configured to perform security detection on the BMC, the service module is in communication isolation from the security detection module, a storage medium accessible to the service module is isolated from a storage medium accessible to the security detection module, and the security detection module is configured to perform the operation steps of the method according to any one of claims 1 to 7.

10. A computer device, wherein the computer device comprises a processor, a storage, and the baseboard management controller BMC according to claim 9, and the BMC is configured to perform the operation steps of the method according to any one of claims 1 to 7.
